# EUROPEAN PATENT APPLICATION

(11) **EP 4 674 298 A1**
(43) Date of publication of application: **07.01.2026**
(21) Application number: 23925184.6
(22) Date of filing: 27.02.2023
(51) Int. Cl.: A24F 40/90, A24F 40/50

(54) **POWER SUPPLY UNIT OF AEROSOL GENERATION DEVICE, CONTROL METHOD, AND CONTROL PROGRAM**

(71) Applicant: Japan Tobacco Inc., Tokyo 105-6927 (JP)
(72) Inventor: NAGAHAMA Toru, Tokyo 130-8603 (JP); YOSHIDA Ryo, Tokyo 130-8603 (JP); AOYAMA Tatsunari, Tokyo 130-8603 (JP)
(74) Representative: Hoffmann Eitle
(86) International application number: PCT/JP2023/007125
(87) International publication number: WO 2024/180626

(57) **Abstract**

A power supply unit (110) for an inhalation device (100A), which is an example of an aerosol-generating device, comprises a power source unit (111A) and a control unit (116A). The power source unit (111A) is configured to be capable of supplying power to a heating unit (121A) for heating an aerosol source and to be chargeable by means of power received from an external power source (PS). The control unit (116A) acquires a power source voltage, constituting an output voltage of the power source unit (111A), and is configured to be capable of controlling charging of the power source unit (111A) based on the power source voltage. The control unit (116A) then sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.

## Description

### TECHNICAL FIELD

The present disclosure relates to a power supply unit for an aerosol-generating device, a control method, and a control program.

### BACKGROUND ART

Aerosol-generating devices which generate an aerosol to which a flavor component has been added and enable a user to inhale the generated aerosol, for example, are conventionally known. This kind of aerosol-generating device typically generates the aerosol by heating an aerosol source by means of a heating unit (also referred to as a "heating element") which is an electrically-resistive or inductively-heated heater, by supplying the heating unit with power from a power source such as a rechargeable battery.

PTL 1 below describes technology in which a first control unit of a power supply unit comprising a power source electrically connected to a load for atomizing an aerosol source or heating a flavor source, and a second control unit of a charging unit capable of charging the power source, control a charging rate of the power source.

### CITATION LIST

### PATENT LITERATURE

PTL 1: JP 6934114 B2

### SUMMARY OF INVENTION

### TECHNICAL PROBLEM

However, there is still room for improvement in the conventional technology described above from the perspective of achieving higher-quality charging control.

The present disclosure provides a power supply unit for an aerosol-generating device, a control method, and a control program that enable higher-quality charging control to be achieved.

### SOLUTION TO PROBLEM

One aspect of the present disclosure is
a power supply unit for an aerosol-generating device for generating an aerosol by heating an aerosol source, the power supply unit comprising:
a power source configured to be capable of supplying power to a heating unit for heating the aerosol source and to be chargeable by means of power received from an external power source; and
a control unit which acquires a power source voltage, constituting an output voltage of the power source, and is configured to be capable of controlling charging of the power source based on the power source voltage,
wherein
the control unit
sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.

Furthermore, another aspect of the present disclosure is
a control method performed by a computer for controlling a power supply unit for an aerosol-generating device for generating an aerosol by heating an aerosol source, wherein
the power supply unit comprises a power source configured to be capable of supplying power to a heating unit for heating the aerosol source and to be chargeable by means of power received from an external power source,
the computer acquires a power source voltage, constituting an output voltage of the power source, and is configured to be capable of controlling charging of the power source based on the power source voltage, and
the computer implements processing which
sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.

Furthermore, another aspect of the present disclosure is
a control program which causes a computer for controlling a power supply unit for an aerosol-generating device for generating an aerosol by heating an aerosol source, to implement predetermined processing, wherein
the power supply unit comprises a power source configured to be capable of supplying power to a heating unit for heating the aerosol source and to be chargeable by means of power received from an external power source,
the computer acquires a power source voltage, constituting an output voltage of the power source, and is configured to be capable of controlling charging of the power source based on the power source voltage, and
the control program causes the computer to implement processing which
sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.

### ADVANTAGEOUS EFFECTS OF INVENTION

The present disclosure can provide a power supply unit for an aerosol-generating device, a control method, and a control program that enable higher-quality charging control to be achieved.

### BRIEF DESCRIPTION OF DRAWINGS

Fig. 1A is a schematic diagram schematically showing a first configuration example of an inhalation device.
Fig. 1B is a schematic diagram schematically showing a second configuration example of an inhalation device.
Fig. 2 shows an example of CCCV charging.
Fig. 3 shows an example of first charging control performed by the control unit 116.
Fig. 4 shows a first determination example of whether the first charging control or second charging control is to be performed by the control unit 116.
Fig. 5 shows a second determination example of whether the first charging control or second charging control is to be performed by the control unit 116.
Fig. 6 shows a third determination example of whether the first charging control or second charging control is to be performed by the control unit 116.
Fig. 7 shows a fourth determination example of whether the first charging control or second charging control is to be performed by the control unit 116.
Fig. 8 is a flowchart showing an example of processing relating to charging implemented by the control unit 116.
Fig. 9 shows a determination example of whether third charging, fourth charging, or second charging is to be performed by the control unit 116.

### DESCRIPTION OF EMBODIMENTS

Embodiments of the power supply unit for an aerosol-generating device, control method and control program according to the present disclosure will be described in detail below with reference to the drawings. The embodiments described below constitute an example in which the aerosol-generating device of the present disclosure is applied to an inhalation device. Note that the drawings shall be viewed in the orientation of the reference signs. Furthermore, hereinafter, identical or similar elements may be assigned identical or similar reference signs, and descriptions thereof may be omitted or simplified as appropriate.

### 1. Configuration example of inhalation device

An inhalation device constituting an example of the aerosol-generating device of the present disclosure is a device for generating a substance to be inhaled by a user. Hereinafter, the substance generated by the inhalation device will be described as being an aerosol. Additionally, the substance generated by the inhalation device may be a gas.

### 1-1. First configuration example of inhalation device

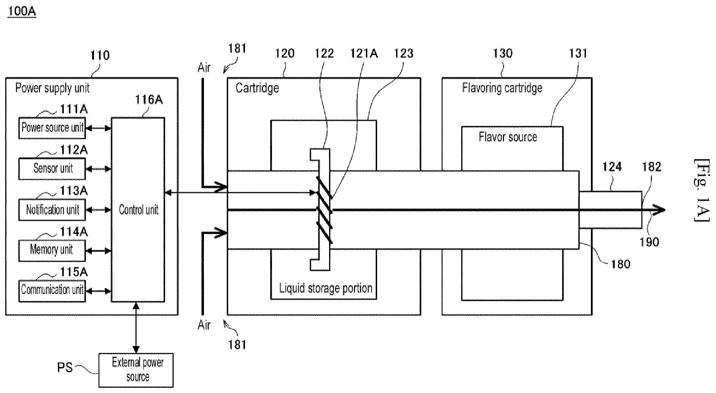

Fig. 1A is a schematic diagram schematically showing a first configuration example of the inhalation device. As shown in fig. 1A, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source PS configured to be capable of outputting predetermined power. Here, the predetermined power is the power which the inhalation device 100A is capable of receiving in terms of hardware, and may be, for example, a DC voltage having a predetermined voltage (e.g., 5-20 [V]). The external power source PS may be an AC adapter (AC: alternating current) configured to be capable of outputting the predetermined power, for example. Furthermore, the external power source PS is not limited to an AC adapter, and may be, for example, a portable charger (also referred to as a power bank), a PC (personal computer), a smartphone, or a tablet terminal, for example. The power source unit 111A may be configured, for example, by a rechargeable battery such as a lithium ion secondary battery.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of detecting the temperature of the heating unit 121A or the temperature around the heating unit 121A.

Furthermore, the sensor unit 112A may include a voltage sensor capable of detecting a battery voltage V_{BAT} which is an output voltage of the power source unit 111A. The battery voltage V_{BAT} is an example of the power source voltage of the present disclosure. The sensor unit 112A may further include a temperature sensor capable of detecting the temperature of the power source unit 111A.

Furthermore, the sensor unit 112A may comprise an input device, such as an operation button or a switch, for accepting input of information from the user. As an example, the sensor unit 112A may include an operation button as the input device that accepts a charging start request, which is described later.

The notification unit 113A notifies the user of information. The notification unit 113A can be configured by a light-emitting device which emits light, a display device which displays images, a sound output device which outputs sound, or a vibration device which vibrates, etc., for example.

The memory unit 114A stores various information (e.g. programs and data) for operation of the inhalation device 100A. The memory unit 114A can be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. For example, the control unit 116A controls the supply of electricity (power supply) from the power source unit 111A to each component (e.g., the heating unit 121A to be described later), and controls charging of the power source unit 111A by means of power received from the external power source PS. Charging control, etc. performed by the control unit 116A will be described later and will therefore not be described here. Note that the control unit 116A is realized by a central processing unit (CPU) or an electronic circuit such as a microprocessor, for example. As an example, the control unit 116A can be realized by an MCU (Micro Controller Unit), or the like.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1A, the heating unit 121A is configured as a coil wrapped around a heating resistor comprising nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity (power supply) to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of a conductive material, such as a metal, and generates heat by means of electromagnetic induction. Furthermore, the susceptor is arranged adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as shredded tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. Furthermore, the flavor source 131 may be arranged inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Along the air flow path 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth to make it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not depicted) for heating the flavor source 131. The flavor source heating unit is configured in a film shape and disposed so as to cover the outer circumference of the flavor source 131, for example. The flavor source heating unit then generates heat when supplied with power from the power source unit 111A, heating the flavor source 131 from the outer periphery thereof. Note that the flavor source heating unit may also be configured in a blade shape, piercing the flavor source 131 to heat the flavor source 131 from the inside, for example. Furthermore, the flavor source heating unit may be configured to heat the flavor source 131 by means of vibration or induction heating. Providing this flavor source heating unit makes it possible to increase the temperature of the flavor source 131 and to increase the amount of flavor component added to the aerosol, as compared to when the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 1-2. Second configuration example of inhalation device

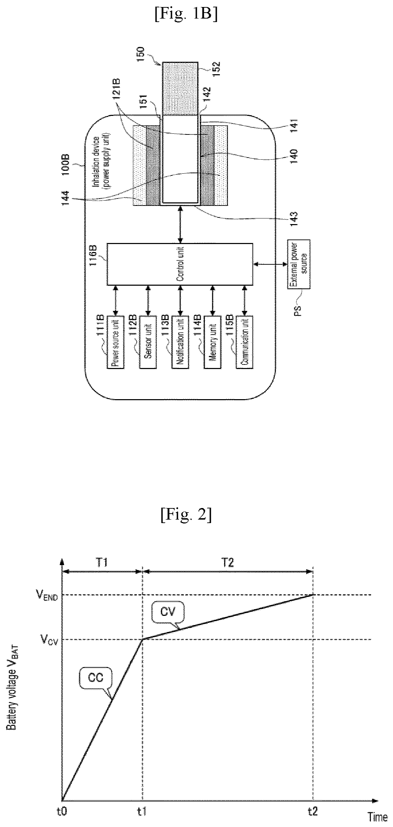

Fig. 1B is a schematic diagram schematically showing a second configuration example of the inhalation device. As shown in fig. 1B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 1B, the inhalation device 100B itself may also be referred to as the power supply unit.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source comprises a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

In the example shown in fig. 1B, the heating unit 121B is configured as a film heater with a conductive track made of a heating resistor having a correlation between electrical resistance and temperature, and is arranged to cover the outer circumference of the housing part 140. Then, when the heating unit 121B generates heat, the substrate portion 151 of the stick-type substrate 150 is heated from the outer circumference, generating the aerosol. Note that a heating resistor the same as that of the heating unit 121A described above may be used as the heating resistor of the heating unit 121B.

The heat insulating portion 144 prevents heat transfer from the heating unit 121B to other components. For example, the heat insulating portion 144 is configured by a vacuum insulating material or an aerogel insulating material, etc.

A configuration example of the inhalation device 100B has been described above. The inhalation device 100B is, of course, not limited to the configuration described above, and various configurations, such as those illustrated below by way of example, may be adopted.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In this case, the inhalation device 100B comprises at least an electromagnetic induction source such as a coil for generating a magnetic field, instead of the heating portion 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the heating unit 111A, etc. may be referred to as the "heating unit 111", the sensor unit 112A, etc. may be referred to as the "sensor unit 112", the notification unit 113A, etc. may be referred to as the "notification unit 113", the memory unit 114A, etc. may be referred to as the "memory unit 114", the communication unit 115A, etc. may be referred to as the "communication unit 115", the control unit 116A, etc. may be referred to as the "control unit 116", and the heating unit 121A, etc. may be referred to as the "heating unit 121".

### 2. Charging control

Charging control performed by the control unit 116 will be described next. When there is a user charging start request, the control unit 116 charges the power source unit 111 with power received from the external power source PS. Here, the charging start request may establish an electrical connection between the inhalation device 100 and the external power source PS, for example.

The inhalation device 100 and the external power source PS may be electrically connected by way of a receptacle and plug conforming to standards such as USB-type C (registered trademark), microUSB, or Lightning (registered trademark), or may be electrically connected by means of contactless power transfer (WPT: wireless power transfer). For example, the user can electrically connect the inhalation device 100 and the external power source PS by inserting the plug of the external power source PS into the receptacle of the inhalation device 100.

Furthermore, the charging start request may further comprise a predetermined operation being performed once the electrical connection between the inhalation device 100 and the external power source PS has been established. This operation may be, for example, pressing of a predetermined operation button provided on the inhalation device 100. Furthermore, this operation is not limited to a direct operation on the inhalation device 100, and it may equally be an operation on another device such as a smartphone which is capable of communicating with the inhalation device 100.

When the power source unit 111 is being charged, the control unit 116 acquires the battery voltage V_{BAT} based on detection results of the sensor unit 112 at a predetermined period (e.g., every 5 [ms]), for example, and controls charging of the power source unit 111 based on the acquired battery voltage V_{BAT}.

As an example in this embodiment, it will be assumed that the control unit 116 charges the power source unit 111 by means of constant-current constant-voltage charging, which is a combination of constant-current charging and constant-voltage charging. Here, constant-current charging is a charging mode in which charging is performed with a fixed charging current being supplied to the power source unit 111, and is an example of "charging employing a first mode" of the present disclosure. Furthermore, constant-voltage charging is a charging mode in which charging is performed with a fixed charging voltage being supplied to the power source unit 111, and is an example of "charging employing a second mode" of the present disclosure.

It should be noted that constant-current charging will also be referred to below as "CC charging", constant-voltage charging will also be referred to below as "CV charging", and constant-current constant-voltage charging, which is a combination of constant-current charging and constant-voltage charging, will also be referred to below as "CCCV charging".

Fig. 2 shows an example of CCCV charging. In fig. 2, the horizontal axis denotes time, and the vertical axis denotes battery voltage V_{BAT}.

In CCCV charging, as shown in fig. 2, for example, CC charging is performed in a period T1 from a time t0 at which charging was started in response to a user charging start request, until a time t1 at which the battery voltage _{BAT} reaches a predetermined switching voltage V_{CV}. CV charging is then performed in a period T2 from the time t1 until a time t2 at which the battery voltage V_{BAT} reaches a predetermined charging end voltage V_{END}, and one series of CCCV charging is completed at the time t2.

This CCCV charging enables efficient charging until the power source unit 111 reaches a state of full charge (in other words, until the battery voltage V_{BAT} reaches the charging end voltage V_{END}). More specifically, a greater charging current is provided by CC charging until the battery voltage V_{BAT} is reasonably close to the charging end voltage V_{END}, and the power source unit 111 can be rapidly charged. Charging then progresses and the battery voltage V_{BAT} approaches the charging end voltage V_{END}, after which the charging current is restricted by means of CV charging whereby charging can be performed while taking account of safety so that the power source unit 111 is not overcharged.

When CCCV charging is performed in this way, the charging time required until a state of full charge is reached (this will also be referred to below simply as the "charging time") can be shortened by making the period of CC charging (e.g., the period T1 shown in fig. 2) as long as possible. That is to say, a shorter charging time can be envisaged by setting the switching voltage V_{CV} serving as the condition for switching from CC charging to CV charging at the highest possible voltage to delay the switch from CC charging to CV charging.

The switching voltage V_{CV} is typically set on the basis of the charging end voltage V_{END}. More specifically, if the switching voltage V_{CV} is Va [V] and the charging end voltage V_{END} is Vb [V] (where Vb>Va), then Va [V] is calculated as Va [V] = k × Vb [V] using a predetermined coefficient k which is greater than "0 (zero)" and smaller than "1".

Accordingly, if the charging end voltage V_{END} on which the switching voltage V_{CV} is based is increased, then the switching voltage V_{CV} can also be proportionately increased. However, the charging end voltage V_{END} serving as the charging end condition is often established to take account of hardware constraints such as rechargeable battery specification. It is therefore difficult to increase the switching voltage V_{CV} by increasing the charging end voltage V_{END} serving as the charging end condition.

In this embodiment, the control unit 116 therefore sets the switching voltage V_{CV} on the basis of a provisional charging end voltage V_{END}', which is higher than the actual charging end voltage V_{END}, performs CC charging until the battery voltage V_{BAT} reaches the switching voltage V_{CV}, and then performs CV charging until the battery voltage V_{BAT} reaches the charging end voltage V_{END}. This makes it possible to increase the switching voltage V_{CV} without increasing the charging end voltage V_{END} serving as the end condition in the series of charging operations. Accordingly, the switch from CC charging (i.e., charging employing the first mode) to CV charging (i.e., charging employing the second mode) can be delayed. It is therefore possible to suppress a lengthening of the charging time due to an early switch from CC charging to CV charging, and a shorter charging time can be envisaged. The power source unit 111 can then be suitably charged without being overcharged, while the charging time is also shortened by delaying the switch from CC charging to CV charging, and higher-quality charging control can be achieved.

It should be noted that charging control as referred to in the above "sets the switching voltage V_{CV} on the basis of a provisional charging end voltage V_{END}', which is higher than the actual charging end voltage V_{END}, performs CC charging until the battery voltage V_{BAT} reaches the switching voltage V_{CV}, and then performs CV charging until the battery voltage V_{BAT} reaches the charging end voltage V_{END}" will also be referred to below as "first charging control".

In contrast to this, charging control as referred to in "sets the switching voltage V_{CV} on the basis of the actual charging end voltage V_{END}, performs CC charging until the battery voltage V_{BAT} reaches the switching voltage V_{CV}, and then performs CV charging until the battery voltage V_{BAT} reaches the charging end voltage V_{END}" will also be referred to below as "second charging control".

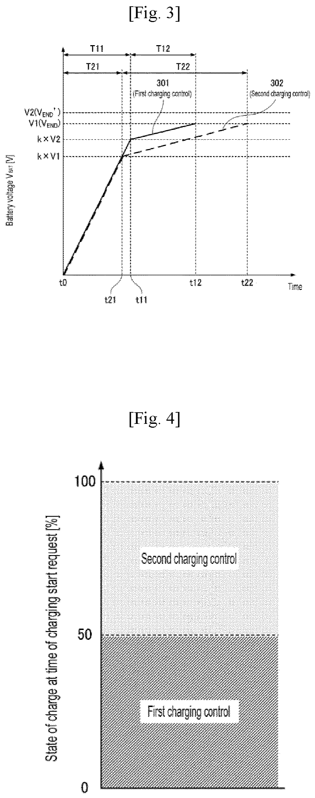

Fig. 3 shows an example of first charging control performed by the control unit 116. In fig. 3, the horizontal axis denotes time, and the vertical axis denotes a voltage value [V] of the battery voltage V_{BAT}. Note that, in this section, the focus is on the areas that differ from those described in fig. 2, and the areas that are common to those described in fig. 2 will be omitted or simplified as appropriate.

In this example, let V1 [V] be the charging end voltage V_{END} (e.g., 4.17 [V]), and let V2 [V] be the provisional charging end voltage V_{END}' (e.g., 4.20 [V]). In this case, the switching voltage V_{CV} which is set on the basis of the provisional charging end voltage V_{END}' may be expressed as k × V2 [V] using the abovementioned coefficient k. In contrast to this, the switching voltage V_{CV} which is set on the basis of the switching voltage V_{CV} on the basis of the actual charging end voltage V_{END} may be expressed as k × V1 [V].

In fig. 3, the transition of the battery voltage V_{BAT} shown by the reference sign 301 represents the transition of the battery voltage V_{BAT} when the first charging control was performed. Furthermore, the transition of the battery voltage V_{BAT} shown by the reference sign 302 represents the transition of the battery voltage V_{BAT} when the second charging control was assumed to have been performed.

When the power source unit 111 is charged by means of the first charging control, the control unit 116 performs CC charging in a period T11 from a time t0 at which charging was started in response to a user charging start request, until a time t11 at which the battery voltage V_{BAT} reaches k × V2 [V]. Here, k × V2 [V] is the switching voltage V_{CV} set on the basis of the provisional charging end voltage V_{END}'. The control unit 116 then performs CV charging in a period T12 from the time t11 until a time t12 at which the battery voltage V_{BAT} reaches V1 [V], and one series of CCCV charging is completed at the time t12. Here, V1 [V] is the actual charging end voltage V_{END}.

In contrast to this, let us assume that the control unit 116 charges the power source unit 111 by means of second charging control. In this case, the control unit 116 performs CC charging in a period T21 from the time t0 at which charging was started in response to a user charging start request, until a time t21 at which the battery voltage V_{BAT} reaches k × V1 [V]. Here, k × V1 [V] is the switching voltage V_{CV} set on the basis of the actual charging end voltage V_{END}. The control unit 116 then performs CV charging in a period T22 from the time t21 until a time t22 at which the battery voltage V_{BAT} reaches V1 [V], and one series of CCCV charging is completed at the time t22.

When the second charging control is performed in this way, the switching voltage V_{CV} is lower than in the first charging control, so the switch from CC charging to CV charging is made proportionately earlier. In other words, when the first charging control is performed, the switching voltage V_{CV} is higher than in the second charging control, so the switch from CC charging to CV charging is proportionately delayed. Accordingly, the period in which the power source unit 111 can be charged with a large charging current can be lengthened in the first charging control as compared to the second charging control (in the example shown in fig. 3, period T11 > period T21), and a shorter charging time can be envisaged.

Meanwhile, the first charging control provides a longer period of charging with a large charging current, so the power source unit 111 may generate more heat than with the second charging control. If the power source unit 111 generates heat on more occasions, this may cause a deterioration in the rechargeable battery constituting the power source unit 111, and may shorten the lifespan of the power source unit 111. The lifespan of the power source unit 111 is preferably kept as long as possible to take account of user convenience.

The control unit 116 may therefore be configured to be capable of performing the first charging control and the second charging control, may determine whether to perform the first charging control or to perform the second charging control based on the state of the inhalation device 100 at the time of a charging start request, and may perform the first charging control or the second charging control based on the result of this determination. This makes it possible to selectively perform either of the first charging control, which enables efficient charging of the power source unit 111, and the second charging control, which reduces the load on the power source unit 111, while taking account of the state of the inhalation device 100 at the time of a charging start request.

Fig. 4 shows a first determination example of whether the first charging control or second charging control is to be performed by the control unit 116. As shown in fig. 4, the control unit 116 may determine whether to perform the first charging control or to perform the second charging control based on a state of charge (SOC) of the power source unit 111 at the time of a charging start request, and may perform the first charging control or the second charging control based on the result of this determination, for example.

More specifically, when the state of charge at the time of the charging start request is less than a predetermined value (50 [%] in the example shown in fig. 4), the control unit 116 may determine that the first charging control is to be performed, and may then perform the first charging control. Meanwhile, when the state of charge at the time of the charging start request is equal to or greater than the predetermined value, the control unit 116 may determine that the second charging control is to be performed, and may then perform the second charging control. Here, the predetermined value may be preset by the manufacturer of the inhalation device 100, or may be set at any value by the user.

That is to say, charging of the power source unit 111 may be started from a state in which the state of charge is 50 [%] or greater, which is relatively close to a state of full charge, and may also be started from a state in which the state of charge is less than 50 [%], which is relatively far from a state of full charge. When charging is started from a state relatively close to a state of full charge, the charging time will still be reasonably short even though the charging is performed by means of the second charging control. It is therefore less important for charging to be performed by the first charging control in such a case.

The first charging control can therefore be effectively performed by performing the first charging control only when the state of charge at the time of the charging start request is less than the predetermined value, in other words, only in a state relatively far from a state of full charge. This makes it possible to suitably perform charging by means of the first charging control, and makes it possible to suppress a shortening of the lifespan of the power source unit 111 due to the first charging control. Furthermore, charging is performed by means of the second charging control in a situation where charging by means of the first charging control is assumed to be less important, thereby enabling charging to be performed while restricting the load on the power source unit 111 (i.e., heat generation by the power source unit 111).

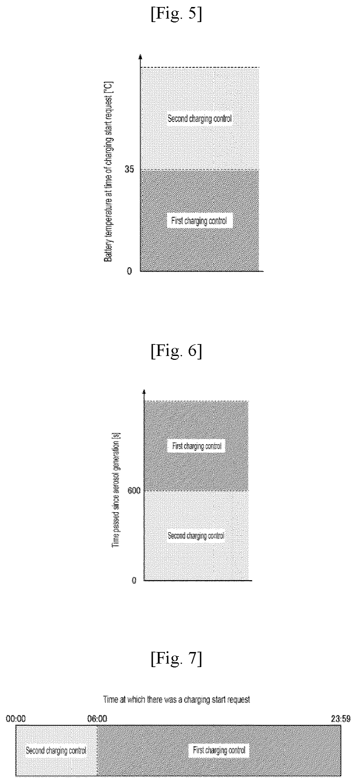

Fig. 5 shows a second determination example of whether the first charging control or second charging control is to be performed by the control unit 116. As shown in fig. 5, the control unit 116 may determine whether to perform the first charging control or to perform the second charging control based on a temperature of the power source unit 111 (also referred to below as the "battery temperature") at the time of a charging start request, and may perform the first charging control or the second charging control based on the result of this determination, for example. It should be noted that, in this case, the control unit 116 is configured to be capable of acquiring the battery temperature on the basis of a detection result from the sensor unit 112, for example.

More specifically, when the battery temperature at the time of the charging start request is less than a predetermined value (35 [°C] in the example shown in fig. 5), the control unit 116 may determine that the first charging control is to be performed, and may then perform the first charging control. Meanwhile, when the battery temperature at the time of the charging start request is equal to or greater than the predetermined value, the control unit 116 may determine that the second charging control is to be performed, and may then perform the second charging control. Here, the predetermined value may be preset by the manufacturer of the inhalation device 100, or may be set at any value by the user.

Thus, by performing the first charging control only when the battery temperature at the time of the charging start request is less than the predetermined value, in other words, only when the power source unit 111 is at a relatively low temperature, it is possible to limit situations in which charging by means of the first charging control is performed while the battery temperature is relatively high, which would lead to a further increase in the battery temperature. This makes it possible to suitably perform charging by means of the first charging control, and makes it possible to suppress a shortening of the lifespan of the power source unit 111 due to the first charging control. Furthermore, charging is performed by means of the second charging control in a situation where the battery temperature is relatively high, thereby enabling charging to be performed while restricting the load on the power source unit 111 (i.e., heat generation by the power source unit 111).

Fig. 6 shows a third determination example of whether the first charging control or second charging control is to be performed by the control unit 116. As shown in fig. 6, the control unit 116 may determine whether to perform the first charging control or to perform the second charging control based on a time which has passed since aerosol generation, and may perform the first charging control or the second charging control based on the result of this determination, for example. It should be noted that, in this case, the memory unit 114 appropriately stores information indicating a history of usage of the inhalation device 100 (e.g., when the user smoked) each time the user uses the inhalation device 100 (e.g., each time the user smokes using the inhalation device 100), and the control unit 116 is configured to be capable of acquiring, based on this information, the time which has passed since aerosol generation.

More specifically, when there is a charging start request after a predetermined time has passed since generation of the aerosol (time passed ≥ 600 [s] in the example shown in fig. 6), the control unit 116 may determine that the first charging control is to be performed, and may then perform the first charging control. Meanwhile, when there is a charging start request before the predetermined time has passed since generation of the aerosol, the control unit 116 may determine that the second charging control is to be performed, and may then perform the second charging control. Here, the predetermined time may be preset by the manufacturer of the inhalation device 100, or may be set at any value by the user.

That is to say, electricity is supplied from the power source unit 111 to the heating unit 121 (i.e., the power source unit 111 is discharged) when the aerosol is generated by means of the heating unit 121. It is therefore also conceivable that the battery temperature will be higher immediately after generation of the aerosol.

Thus, by performing the first charging control only when the predetermined time has passed since generation of the aerosol, it is possible to limit situations in which charging by means of the first charging control is performed while the battery temperature is assumed to be relatively high immediately after generation of the aerosol, which would lead to a further increase in the battery temperature. This makes it possible to suitably perform charging by means of the first charging control, and makes it possible to suppress a shortening of the lifespan of the power source unit 111 due to the first charging control. Furthermore, charging is performed by means of the second charging control in a situation where the battery temperature is assumed to be relatively high immediately after aerosol generation, thereby enabling charging to be performed while restricting the load on the power source unit 111 (i.e., heat generation by the power source unit 111).

Fig. 7 shows a fourth determination example of whether the first charging control or second charging control is to be performed by the control unit 116. As shown in fig. 7, the control unit 116 may determine whether to perform the first charging control or to perform the second charging control based on a time at which there was a charging start request, may determine whether to perform the first charging control or the second charging control based on the result of this determination, and may perform the first charging control or the second charging control based on the result of this determination, for example. It should be noted that in this case, the control unit 116 may be configured to acquire the time from a real time clock (RTC) provided in the inhalation device 100, or may be configured to acquire the time by communicating with a network time protocol (NTP) server via the communication unit 115.

More specifically, when the time at which there was a charging start request is included in a predetermined time slot, the control unit 116 may determine that the first charging control is to be performed, and may then perform the first charging control. Meanwhile, when the time at which there was a charging start request is not included in the predetermined time slot, the control unit 116 may determine that the second charging control is to be performed, and may then perform the second charging control.

Here, the predetermined time slot may be a time slot during which it is assumed that the user is likely to be using the inhalation device 100, for example. In the example shown in fig. 7, the time slot serving as the condition under which the first charging control is performed is a time slot between 0600h and 2359h, during which the user is assumed to be active (awake, in other words). The time slot serving as the condition under which the first charging control is performed may be preset by the manufacturer of the inhalation device 100, or may be set in any way by the user.

Furthermore, the control unit 116 may deduce a time slot during which it is assumed that the user is likely to be using the inhalation device 100 from the situation of usage of the inhalation device 100 by the user up to that point in time, and the control unit 116 may set the deduced time slot as the time slot serving as the condition under which the first charging control is performed. In this case, the memory unit 114 appropriately stores information indicating the history of usage of the inhalation device 100 (e.g., when the user smoked) each time the user uses the inhalation device 100 (e.g., each time the user smokes using the inhalation device 100), thereby enabling the control unit 116 to deduce, based on this information, a time slot during which it is assumed that the user is likely to be using the inhalation device 100.

Thus, by performing the first charging control only when the time at which there was a charging start request is in the predetermined time slot, it is possible to limit situations in which charging by means of the first charging control is performed for charging in a time slot during which it is assumed that the user is unlikely to be using the inhalation device 100, such as during the middle of the night, for example. This makes it possible to suitably perform charging by means of the first charging control, and makes it possible to suppress a shortening of the lifespan of the power source unit 111 due to the first charging control. Furthermore, charging is performed by means of the second charging control for charging in a time slot during which it is assumed that the user is unlikely to be using the inhalation device 100, thereby enabling charging to be performed while restricting the load on the power source unit 111 (i.e., heat generation by the power source unit 111).

### 3. Example of processing relating to charging implemented by control unit

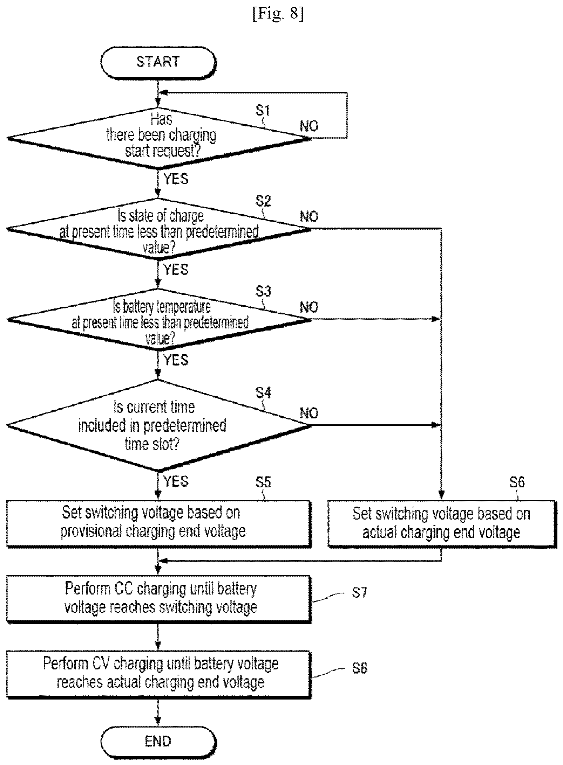

An example of processing relating to charging implemented by the control unit 116 will be described next. Fig. 8 is a flowchart showing an example of processing relating to charging implemented by the control unit 116. As shown in fig. 8, the control unit 116 determines whether or not there has been a charging start request from the user (step S1). If it is determined that there is no charging start request (step S1: NO), the control unit 116 repeats the processing of step S1 until it is determined that there has been a charging start request.

If it is determined that there has been a charging start request (step S1: YES), the control unit 116 determines whether or not the state of charge of the power source unit 111 at the present time is less than a predetermined value (e.g., 50 [%]) (step S2). If it is determined that the state of charge is equal to or greater than the predetermined value (step S2: NO), the control unit 116 advances to the processing of step S6.

If it is determined that the state of charge is less than the predetermined value (step S2: YES), the control unit 116 determines whether or not the battery temperature of the power source unit 111 at the present time is less than a predetermined value (e.g., 35 [°C]) (step S3). If it is determined that the battery temperature is equal to or greater than the predetermined value (step S3: NO), the control unit 116 advances to the processing of step S6.

If it is determined that the battery temperature is less than the predetermined value (step S3: YES), the control unit 116 determines whether or not the current time is included in a predetermined time slot serving as the condition under which the first charging control is performed (step S4).

If it is determined that the current time is included in the predetermined time slot (step S4: YES), the control unit 116 sets the switching voltage V_{CV} based on the provisional charging end voltage V_{END}' (step S5). Meanwhile, if it is determined that the current time is not included in the predetermined time slot (step S4: NO), the control unit 116 sets the switching voltage V_{CV} based on the actual charging end voltage V_{END} (step S6).

The control unit 116 then performs CC charging until the battery voltage V_{BAT} reaches the switching voltage V_{CV} which was set in step S5 or step S6 (step S7). When the battery voltage V_{BAT} reaches the switching voltage V_{CV}, the control unit 116 then performs CV charging until the battery voltage V_{BAT} reaches the charging end voltage V_{END} (step S8). It should be noted that if the electrical connection between the inhalation device 100 and the external power source PS is interrupted during charging of the power source unit 111, the control unit 116 terminates charging of the power source unit 111 at that point in time.

As described above, by virtue of the inhalation device 100, the switching voltage V_{CV} is set on the basis of the provisional charging end voltage V_{END}', which is higher than the actual charging end voltage V_{END}, CC charging is performed until the battery voltage V_{BAT} reaches the switching voltage V_{CV}, and CV charging is then performed until the battery voltage V_{BAT} reaches the charging end voltage V_{END}. This makes it possible to increase the switching voltage V_{CV} without increasing the charging end voltage V_{END} serving as the end condition in the series of CCCV charging operations. Accordingly, the switch from CC charging to CV charging can be delayed. It is therefore possible to suppress a lengthening of the charging time due to an early switch from CC charging to CV charging, and a shorter charging time can be envisaged. The power source unit 111 can then be suitably charged without being overcharged, while the charging time is also shortened by delaying the switch from CC charging to CV charging, and higher-quality charging control can be achieved.

Note that specific numerical values given in the embodiments above are merely examples and are not limiting. Furthermore, the embodiments above may be modified or improved, etc. as appropriate.

For example, in the embodiments described above, there was one provisional charging end voltage V_{END}', but this is not limiting. For example, two provisional charging end voltages V_{END}' may be provided: V11 [V] and V12 [V] (where V12 < V12). Based on the state of the inhalation device 100 at the time of the charging start request, the control unit 116 may then determine whether to perform the first charging control with the provisional charging end voltage V_{END}' at V11 [V], whether to perform the first charging control with the provisional charging end voltage V_{END}' at V12 [V], or whether to perform the second charging control.

Here, the first charging control with the provisional charging end voltage V_{END}' at V11 [V] constitutes charging control in which the switching voltage V_{CV} (e.g., switching voltage V_{CV} = k × V11 [V]) is set on the basis of V11 [V], and CC charging is performed until the battery voltage V_{BAT} reaches the switching voltage V_{CV}, after which CV charging is performed until the battery voltage V_{BAT} reaches the charging end voltage V_{END}.

Furthermore, the first charging control with the provisional charging end voltage V_{END}' at V12 [V] constitutes charging control in which the switching voltage V_{CV} (e.g., switching voltage V_{CV} = k × V12 [V]) is set on the basis of V12 [V], and CC charging is performed until the battery voltage V_{BAT} reaches the switching voltage V_{CV}, after which CV charging is performed until the battery voltage V_{BAT} reaches the charging end voltage V_{END}.

In order to distinguish between the first charging control with the provisional charging end voltage V_{END}' at V11 [V] and the first charging control with the provisional charging end voltage V_{END}' at V12 [V], the first charging control with the provisional charging end voltage V_{END}' at V11 [V] will also be referred to below as "third charging control", and the first charging control with the provisional charging end voltage V_{END}' at V12 [V] will also be referred to below as "fourth charging control".

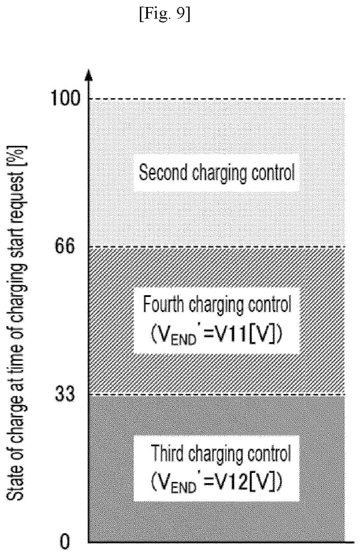

Fig. 9 shows a determination example of whether third charging, fourth charging, or second charging is to be performed by the control unit 116. In this example, as shown in fig. 9, the control unit 116 may perform the third charging control when the state of charge of the power source unit 111 at the time of the charging start request is less than a first predetermined value (33 [%] in the example shown in fig. 9). Furthermore, the control unit may perform the fourth charging control when the state of charge at the time of the charging start request is equal to or greater than the first predetermined value and less than a second predetermined value (66 [%] in the example shown in fig. 9). The control unit 116 may then perform the second charging control when the state of charge at the time of the charging start request is equal to or greater than the second predetermined value. Here, the first predetermined value and the second predetermined value may be preset by the manufacturer of the inhalation device 100, or may be set at any values by the user.

The third charging control, fourth charging control, or second charging control is thus performed in accordance with the state of charge at the time of the charging start request, thereby taking account of the state of charge at the time of the charging start request to enable suitable charging control to be performed from the perspective of charging efficiency and the load on the power source unit 111 resulting from charging, which therefore makes it possible to provide higher-quality charging control.

Furthermore, the control unit 116 may perform the third charging control, fourth charging control, or second charging control in accordance with the battery temperature at the time of the charging start request, in the same way as in the example described here. As an example, the control unit 116 may perform the third charging control when the battery temperature at the time of the charging start request is less than a first predetermined value (e.g., 30 [°C]), may perform the fourth charging control when the battery temperature is equal to or greater than the first predetermined value and less than a second predetermined value (e.g., 35 [°C]), and may perform the second charging control when the battery temperature is equal to or greater than the second predetermined value.

In the same way, the control unit 116 may perform the third charging control, the fourth charging control, or the second charging control in accordance with the time which has passed since aerosol generation, or the time at which there was a charging start request. Furthermore, three or more voltage values may be provided for the provisional charging end voltage V_{END}'.

Furthermore, the control method described in the embodiments above can be realized by executing a pre-prepared program on a computer (processor). The program is stored on a computer-readable storage medium, and is executed by being read out from the storage medium. The program may also be provided in a form stored in a non-transitory storage medium such as a flash memory, or may be provided over a network such as the Internet. Furthermore, the computer executing the program may be, for example, included in the inhalation device 100 (e.g., the CPU of the inhalation device 100), but this is not limiting, and the computer may also be included in another device (e.g., a smartphone or server) capable of communicating with the inhalation device 100.

Embodiments of the power supply unit for an aerosol-generating device, control method and control program according to the present disclosure were described above, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present invention. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.
(1) A power supply unit (inhalation device 100, 100B; power supply unit 110) for an aerosol-generating device (inhalation device 100, 100A, 100B) for generating an aerosol by heating an aerosol source, the power supply unit comprising:
   a power source (power source unit 111, 111A, 111B) configured to be capable of supplying power to a heating unit (heating unit 121, 121A, 121B) for heating the aerosol source and to be chargeable by means of power received from an external power source (external power source PS); and
   a control unit (control unit 116, 116A, 116B) which acquires a power source voltage (battery voltage V_{BAT}), which is an output voltage of the power source, and is configured to be capable of controlling charging of the power source based on the power source voltage,
   wherein
   the control unit
   sets a switching voltage (switching voltage V_{CV}) based on a provisional charging end voltage (provisional charging end voltage V_{END}') higher than an actual charging end voltage (charging end voltage V_{END}), performs charging employing a first mode until the power source voltage reaches the switching voltage, and then performs charging employing a second mode until the power source voltage reaches said actual charging end voltage.
   According to (1), a switching voltage is set on the basis of a provisional charging end voltage, which is higher than an actual charging end voltage, charging employing a first mode is performed until the power source voltage reaches the switching voltage, and charging employing a second mode is then performed until the power source voltage reaches said actual charging end voltage. This makes it possible to increase the switching voltage without increasing the charging end voltage serving as the end condition in the series of charging operations. Accordingly, the switch from charging employing the first mode to charging employing the second mode can be delayed. It is therefore possible to suppress a lengthening of the charging time due to an early switch from charging employing the first mode to charging employing the second mode, and a shorter charging time can be envisaged.
(2) The power supply unit as disclosed in (1), wherein
   charging employing the first mode is constant-current charging, and
   charging employing the second mode is constant-voltage charging.
   According to (2) it is possible to suppress a lengthening of the charging time due to an early switch from constant-current charging to constant-voltage charging, and a shorter charging time can be envisaged.
(3) The power supply unit as disclosed in (1) or (2), wherein
   the control unit is configured to be capable of performing
   first charging control, in which the switching voltage is set on the basis of the provisional charging end voltage, charging employing the first mode is performed until the power source voltage reaches the switching voltage, and charging employing the second mode is then performed until the power source voltage reaches the charging end voltage; and
   second charging control, in which the switching voltage is set on the basis of the charging end voltage, charging employing the first mode is performed until the power source voltage reaches the switching voltage, and charging employing the second mode is then performed until the power source voltage reaches the charging end voltage,
      and
   the control unit performs the first charging control or the second charging control based on a state of the aerosol-generating device when there was a charging start request from a user.
   According to (3) it is possible to selectively perform either of the first charging control, which enables efficient charging of the power source, and the second charging control, which reduces the load on the power source, while taking account of the state of the aerosol-generating device at the time of a charging start request.
(4) The power supply unit as disclosed in (3), wherein
   the control unit
   performs the first charging control when a state of charge of the power source at the time of the charging start request is less than a predetermined value, and
   performs the second charging control when the state of charge of the power source at the time of the charging start request is equal to or greater than the predetermined value.
   According to (4), it is possible to suitably perform charging by means of the first charging control, and it is possible to suppress a shortening of the lifespan of the power source due to the first charging control. Furthermore, charging is performed by means of the second charging control in a situation where charging by means of the first charging control is assumed to be less important, thereby enabling charging to be performed while restricting the load on the power source (i.e., heat generation by the power source).
(5) The power supply unit as disclosed in (3), wherein
   the provisional charging end voltage includes:
   a first provisional charging end voltage, and a second provisional charging end voltage lower than the first provisional charging end voltage,
   the control unit is configured to be capable of performing
   as the first charging control:
      third charging control, in which the switching voltage is set on the basis of the first provisional charging end voltage, charging employing the first mode is performed until the power source voltage reaches the switching voltage, and charging employing the second mode is then performed until the power source voltage reaches the charging end voltage; and
      fourth charging control, in which the switching voltage is set on the basis of the second provisional charging end voltage, charging employing the first mode is performed until the power source voltage reaches the switching voltage, and charging employing the second mode is then performed until the power source voltage reaches the charging end voltage, and
      the control unit performs the third charging control when the state of charge of the power source at the time of the charging start request is less than a first predetermined value,
      performs the fourth charging control when the state of charge of the power source at the time of the charging start request is equal to or greater than the first predetermined value and less than a second predetermined value, and
      performs the second charging control when the state of charge of the power source at the time of the charging start request is equal to or greater than the second predetermined value.
   According to (5), the state of charge at the time of the charging start request is taken into account to enable suitable charging control to be performed from the perspective of charging efficiency and the load on the power source resulting from charging, which therefore makes it possible to provide higher-quality charging control.
(6) The power supply unit as disclosed in (3), wherein
   the control unit
   performs the first charging control when a temperature of the power source at the time of the charging start request is less than a predetermined value, and
   performs the second charging control when the temperature of the power source at the time of the charging start request is equal to or greater than the predetermined value.
   According to (6), it is possible to suitably perform charging by means of the first charging control, and it is possible to suppress a shortening of the lifespan of the power source due to the first charging control. Furthermore, charging is performed by means of the second charging control in a situation where the temperature of the power source is relatively high, thereby enabling charging to be performed while restricting the load on the power source (i.e., heat generation by the power source).
(7) The power supply unit as disclosed in (3), wherein
   the control unit
   performs the first charging control when there is a charging start request after a predetermined time has passed since generation of the aerosol, and
   performs the second charging control when there is a charging start request before the predetermined time has passed since generation of the aerosol.
   According to (7), it is possible to suitably perform charging by means of the first charging control, and it is possible to suppress a shortening of the lifespan of the power source due to the first charging control. Furthermore, charging is performed by means of the second charging control in a situation where the battery temperature is assumed to be relatively high immediately after aerosol generation, thereby enabling charging to be performed while restricting the load on the power source (i.e., heat generation by the power source).
(8) The power supply unit as disclosed in (1) or (2), wherein
   the control unit is configured to be capable of performing
   first charging control, in which the switching voltage is set on the basis of the provisional charging end voltage, charging employing the first mode is performed until the power source voltage reaches the switching voltage, and charging employing the second mode is then performed until the power source voltage reaches the charging end voltage; and
   second charging control, in which the switching voltage is set on the basis of the charging end voltage, charging employing the first mode is performed until the power source voltage reaches the switching voltage, and charging employing the second mode is then performed until the power source voltage reaches the charging end voltage,
      and
   the control unit performs the first charging control or the second charging control based on a time at which there was a charging start request from a user.
   According to (8), it is possible to suitably perform charging by means of the first charging control.
(9) The power supply unit as disclosed in (8), wherein
   the control unit
   performs the first charging control when the time is included in a predetermined time slot during which it is assumed that the user is likely to be using the aerosol-generating device, and
   performs the second charging control when the time is not included in the predetermined time slot.
   According to (9), it is possible to suitably perform charging by means of the first charging control, and it is possible to suppress a shortening of the lifespan of the power source due to the first charging control. Furthermore, charging is performed by means of the second charging control for charging in a time slot during which it is assumed that the user is unlikely to be using the aerosol-generating device, thereby enabling charging to be performed while restricting the load on the power source (i.e., heat generation by the power source).
(10) A control method performed by a computer (control unit 116, 116A, 116B) for controlling a power supply unit (inhalation device 100, 100B; power supply unit 110) for an aerosol-generating device (inhalation device 100, 100A, 100B) for generating an aerosol by heating an aerosol source, wherein
   the power supply unit comprises a power source (power source unit 111, 111A, 111B) configured to be capable of supplying power to a heating unit (heating unit 121, 121A, 121B) for heating the aerosol source and to be chargeable by means of power received from an external power source (external power source PS),
   the computer acquires a power source voltage (battery voltage V_{BAT}), which is an output voltage of the power source, and is configured to be capable of controlling charging of the power source based on the power source voltage, and
   the computer implements processing which
   sets a switching voltage based on a provisional charging end voltage higher than an actual charging end voltage (step S5), performs charging employing a first mode until the power source voltage reaches the switching voltage (step S7), and then performs charging employing a second mode until the power source voltage reaches said actual charging end voltage (step S8).
   According to (10), a switching voltage is set on the basis of a provisional charging end voltage, which is higher than an actual charging end voltage, charging employing a first mode is performed until the power source voltage reaches the switching voltage, and charging employing a second mode is then performed until the power source voltage reaches said actual charging end voltage. This makes it possible to increase the switching voltage without increasing the charging end voltage serving as the end condition in the series of charging operations. Accordingly, the switch from charging employing the first mode to charging employing the second mode can be delayed. It is therefore possible to suppress a lengthening of the charging time due to an early switch from charging employing the first mode to charging employing the second mode, and a shorter charging time can be envisaged.
(11) A control program which causes a computer (control unit 116, 116A, 116B) for controlling a power supply unit (inhalation device 100, 100B; power supply unit 110) for an aerosol-generating device (inhalation device 100, 100A, 100B) for generating an aerosol by heating an aerosol source, to implement predetermined processing, wherein
   the power supply unit comprises a power source (power source unit 111, 111A, 111B) configured to be capable of supplying power to a heating unit (heating unit 121, 121A, 121B) for heating the aerosol source and to be chargeable by means of power received from an external power source (external power source PS),
   the computer acquires a power source voltage (battery voltage V_{BAT}), which is an output voltage of the power source, and is configured to be capable of controlling charging of the power source based on the power source voltage, and
   the control program causes the computer to implement processing which
   sets a switching voltage based on a provisional charging end voltage higher than a charging end voltage which is an actual charging end voltage, performs charging employing a first mode until the power source voltage reaches the switching voltage, and then performs charging employing a second mode until the power source voltage reaches said actual charging end voltage.
   According to (11), a switching voltage is set on the basis of a provisional charging end voltage, which is higher than an actual charging end voltage, charging employing a first mode is performed until the power source voltage reaches the switching voltage, and charging employing a second mode is then performed until the power source voltage reaches said actual charging end voltage. This makes it possible to increase the switching voltage without increasing the charging end voltage serving as the end condition in the series of charging operations. Accordingly, the switch from charging employing the first mode to charging employing the second mode can be delayed. It is therefore possible to suppress a lengthening of the charging time due to an early switch from charging employing the first mode to charging employing the second mode, and a shorter charging time can be envisaged.
(12) A computer-readable storage medium (memory unit 114, 114A, 114B) which stores the control program disclosed in (11).

According to (12), it is possible to cause a computer to implement the control program disclosed in (11).

### REFERENCE SIGNS LIST

100, 100A, 100B Inhalation device (aerosol-generating device, power supply unit)
110 Power supply unit
111, 111A, 111B Power source unit (power source)
121, 121A, 121B Heating unit
116, 116A, 116B Control unit (computer)
PS External power source

## Claims

1. A power supply unit for an aerosol-generating device for generating an aerosol by heating an aerosol source, the power supply unit comprising:
a power source configured to be capable of supplying power to a heating unit for heating the aerosol source and to be chargeable by means of power received from an external power source; and
a control unit which acquires a power source voltage, constituting an output voltage of the power source, and is configured to be capable of controlling charging of the power source based on the power source voltage,
wherein
the control unit
sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.

2. The power supply unit as claimed in claim 1, wherein
charging employing the first mode is constant-current charging, and
charging employing the second mode is constant-voltage charging.

3. The power supply unit as claimed in claim 2, wherein
the control unit is configured to be capable of performing:
first charging control, in which the switching voltage is set on the basis of the provisional charging end voltage, charging employing the first mode is performed until the power source voltage reaches the switching voltage, and charging employing the second mode is then performed until the power source voltage reaches the charging end voltage; and
second charging control, in which the switching voltage is set on the basis of the charging end voltage, charging employing the first mode is performed until the power source voltage reaches the switching voltage, and charging employing the second mode is then performed until the power source voltage reaches the charging end voltage,
and
the control unit performs the first charging control or the second charging control based on a state of the aerosol-generating device when there was a charging start request from a user.

4. The power supply unit as claimed in claim 3, wherein
the control unit
performs the first charging control when a state of charge of the power source at the time of the charging start request is less than a predetermined value, and
performs the second charging control when the state of charge of the power source at the time of the charging start request is equal to or greater than the predetermined value.

5. The power supply unit as claimed in claim 3, wherein
the provisional charging end voltage includes:
a first provisional charging end voltage, and a second provisional charging end voltage lower than the first provisional charging end voltage,
the control unit is configured to be capable of performing,
as the first charging control:
third charging control, in which the switching voltage is set on the basis of the first provisional charging end voltage, charging employing the first mode is performed until the power source voltage reaches the switching voltage, and charging employing the second mode is then performed until the power source voltage reaches the charging end voltage; and
fourth charging control, in which the switching voltage is set on the basis of the second provisional charging end voltage, charging employing the first mode is performed until the power source voltage reaches the switching voltage, and charging employing the second mode is then performed until the power source voltage reaches the charging end voltage, and
the control unit performs the third charging control when the state of charge of the power source at the time of the charging start request is less than a first predetermined value,
performs the fourth charging control when the state of charge of the power source at the time of the charging start request is equal to or greater than the first predetermined value and less than a second predetermined value, and
performs the second charging control when the state of charge of the power source at the time of the charging start request is equal to or greater than the second predetermined value.

6. The power supply unit as claimed in claim 3, wherein
the control unit
performs the first charging control when a temperature of the power source at the time of the charging start request is less than a predetermined value, and
performs the second charging control when the temperature of the power source at the time of the charging start request is equal to or greater than the predetermined value.

7. The power supply unit as claimed in claim 3, wherein
the control unit
performs the first charging control when there is a charging start request after a predetermined time has passed since generation of the aerosol, and
performs the second charging control when there is a charging start request before the predetermined time has passed since generation of the aerosol.

8. The power supply unit as claimed in claim 1 or 2, wherein
the control unit is configured to be capable of performing
first charging control, in which the switching voltage is set on the basis of the provisional charging end voltage, charging employing the first mode is performed until the power source voltage reaches the switching voltage, and charging employing the second mode is then performed until the power source voltage reaches the charging end voltage; and
second charging control, in which the switching voltage is set on the basis of the charging end voltage, charging employing the first mode is performed until the power source voltage reaches the switching voltage, and charging employing the second mode is then performed until the power source voltage reaches the charging end voltage,
and
the control unit performs the first charging control or the second charging control based on a time at which there was a charging start request from a user.

9. The power supply unit as claimed in claim 8, wherein
the control unit
performs the first charging control when the time is included in a predetermined time slot during which it is assumed that the user is likely to be using the aerosol-generating device, and
performs the second charging control when the time is not included in the predetermined time slot.

10. A control method performed by a computer for controlling a power supply unit for an aerosol-generating device for generating an aerosol by heating an aerosol source, wherein
the power supply unit comprises a power source configured to be capable of supplying power to a heating unit for heating the aerosol source and to be chargeable by means of power received from an external power source,
the computer acquires a power source voltage, constituting an output voltage of the power source, and is configured to be capable of controlling charging of the power source based on the power source voltage, and
the computer implements processing which
sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.

11. A control program which causes a computer for controlling a power supply unit for an aerosol-generating device for generating an aerosol by heating an aerosol source, to implement predetermined processing, wherein
the power supply unit comprises a power source configured to be capable of supplying power to a heating unit for heating the aerosol source and to be chargeable by means of power received from an external power source,
the computer acquires a power source voltage, constituting an output voltage of the power source, and is configured to be capable of controlling charging of the power source based on the power source voltage, and
the control program causes the computer to implement processing which
sets a switching voltage based on a provisional charging end voltage higher than an actual charging end voltage, performs charging employing a first mode until the power source voltage reaches the switching voltage, and then performs charging employing a second mode until the power source voltage reaches said actual charging end voltage.
